# EUROPÄISCHE PATENTSCHRIFT

(11) **EP 2 895 908 B1**
(45) Veröffentlichungstag und Bekanntmachung des Hinweises auf die Patenterteilung: **12.02.2020**
(21) Anmeldenummer: 13756334.2
(22) Anmeldetag: 02.08.2013
(51) Int. Cl.: G02B 21/00, G02B 21/36, G02B 21/06, G02B 27/58

(54) **OPTIKANORDNUNG UND LICHTMIKROSKOP**
OPTICAL ARRANGEMENT AND LIGHT MICROSCOPE
DISPOSITIF OPTIQUE ET MICROSCOPE OPTIQUE

(30) Priorität: 11.09.2012 DE 102012017920
(43) Veröffentlichungstag der Anmeldung: 22.07.2015
(73) Patentinhaber: Carl Zeiss Microscopy GmbH, 07745 Jena (DE)
(72) Erfinder: KALKBRENNER, Thomas, 07745 Jena (DE); NETZ, Ralf, 07745 Jena (DE); KLEPPE, Ingo, 07749 Jena (DE)
(74) Vertreter: Loritz, Rainer
(86) Internationale Anmeldenummer: PCT/EP2013/066308
(87) Internationale Veröffentlichungsnummer: WO 2014/040799

(56) Entgegenhaltungen:
- EP-A1- 1 617 252
- EP-A1- 2 136 233
- WO-A1-2012/118436
- WO-A1-2012/118530
- DE-A1-102007 018 048
- DE-A1-102010 062 341

## Beschreibung

Die vorliegende Erfindung betrifft in einem ersten Aspekt eine Optikanordnung zum Positionieren in einem Strahlengang eines Lichtmikroskops nach dem Oberbegriff des Anspruchs 1. In einem weiteren Gesichtspunkt bezieht sich die Erfindung auf ein Lichtmikroskop nach dem Oberbegriff des Anspruchs 14.

Ein gattungsgemäßes Lichtmikroskop weist eine Probenebene, in welcher eine zu untersuchende Probe positionierbar ist, und mindestens eine Lichtquelle zum Aussenden eines Lichtstrahls in Richtung der Probenebene auf. Von der Probe kommendes Licht kann sodann zum Erzeugen eines Probenbilds mit einem Lichtdetektor nachgewiesen werden.

Ein bekanntes Verfahren zum Untersuchen einer Probe mit hoher Auflösung ist die Mikroskopie mit strukturierter Beleuchtung (structured illumination microscopy, SIM). Hierbei werden ein oder mehrere Beugungsgitter in einen Strahlengang des Lichtmikroskops zwischen der Lichtquelle und der Probenebene eingebracht. Somit wird eine Abbildung des Gitters in der Probenebene erzeugt. Werden Probenbilder zu verschiedenen Ausrichtungen des Gitters aufgenommen, kann hieraus ein Probenbild mit erhöhter Auflösung berechnet werden.

Allgemein kann unter strukturiertem Beleuchtungslicht beliebiges Licht mit einer räumlich variablen Intensitätsverteilung über den Strahlquerschnitt verstanden werden. Insbesondere kann Licht mit einer periodischen Intensitätsverteilung über den Querschnitt genutzt werden, beispielsweise ein Linienmuster mit beleuchteten und nicht-beleuchteten Linien. Ein solches Muster kann durch Abbilden eines Liniengitters auf die Probenebene erzeugt werden.

Zum Bereitstellen verschiedener Gitterorientierungen sind verschiedene Vorgehensweisen bekannt. Prinzipiell kann ein einziges Gitter verwendet und in verschiedene Orientierungen gedreht werden. Auch können zusätzlich zu einem Gitter optische Bildfeldrotatoren, beispielsweise ein Abbe-König-Prisma, eingesetzt werden. Hiermit kann eine Bildfelddrehung und somit eine Rotation der Querschnittsfläche eines Lichtstrahls erzeugt werden. Weiterhin können mehrere unterschiedlich gerichtete Gitter vorgesehen sein, von denen jeweils eines durch einen motorischen Gitterwechsler ausgewählt werden kann. Zudem kann eine optische Strahlteilung zur Erzeugung der interferierenden Strahlen erfolgen oder es können superponierte, unterschiedlich gerichtete Gitter auf einem Substrat und Mittel zur Auswahl einer gewünschten Beugungsordnung vorgesehen sein.

Bei einer gattungsgemäßen Optikanordnung zum Positionieren in einem Strahlengang eines Lichtmikroskops ist ein Optikträger vorhanden, an dem ein erster Satz optischer Baugruppen zum Erzeugen von strukturiertem Beleuchtungslicht unterschiedlicher Orientierungen angeordnet ist. Diese optischen Baugruppen sind in der Regel Gitter verschiedener Orientierungen. Der Optikträger kann daher auch als Gitterträger bezeichnet werden.

Herkömmlicherweise wird zwischen Gittern an einem Optikträger gewechselt, indem der Optikträger gedreht wird. Hierdurch befindet sich stets nur eines der vorhandenen Gitter im Strahlengang des Lichtmikroskops. Hierbei ist nachteilig, dass ein Wechsel zwischen verschiedenen Gitterorientierungen verhältnismäßig zeitaufwändig ist. Diese auch als Totzeit bezeichnete Zeitdauer beträgt bei herkömmlichen Optikanordnungen und Lichtmikroskopen typischerweise einige hundert Millisekunden.

Auch bei den übrigen bekannten Optikanordnungen ist die Totzeit zum Wechseln zwischen zwei Gitterorientierungen verhältnismäßig lang. Zudem sind herkömmliche Aufbauten oftmals mechanisch aufwändig, erfordern unter Umständen eine hohe Positioniergenauigkeit von beweglichen optischen Komponenten oder führen auch zu unerwünschten Intensitätsverlusten des Lichtstrahls.

WO 2012/118530 und WO 2012/118436 offenbaren jeweils eine Optikanordnung, durch welche strukturiertes Beleuchtungslicht unterschiedlicher Orientierungen erzeugt werden kann. Hierzu teilt ein Strahlteiler, beispielsweise ein Gitter, Beleuchtungslicht in mehrere Teilstrahlen, die zusammen auf einen Drehspiegel geleitet werden, durch welchen jeweils eine von mehreren Spiegelgruppen auswählbar ist. Die Spiegelgruppen wirken jeweils als Bildfelddreher. Anschließend werden die Teilstrahlen auf einer Probe zur Interferenz gebracht, womit eine strukturierte Beleuchtung auf der Probe erzeugt wird.

DE 10 2010 062 341 A1 beschreibt gitterähnliche Strukturen zum Erzeugen von strukturiertem Beleuchtungslicht. Mit Mitteln zur Positionsvariation werden die gitterartigen Strukturen bewegt. DE 10 2007 018 048 A1 beschreibt eine Optikanordnung, bei welcher eine feststehende Maskenstruktur für eine Strukturierung von auftreffendem Licht verwendet wird. Die Maske kann reflektiv oder transmittiv genutzt werden, um zwei verschiedene Beleuchtungsmuster zu erzeugen. EP 2 136 233 A1 beschreibt ein Mikroskop mit einem Gitter zum Erzeugen von strukturiertem Beleuchtungslicht. EP 1 617 252 A1 betrifft ein Lichtrastermikroskop mit Mitteln zum variablen Aufteilen von Laserlicht auf zwei oder mehr Beleuchtungskanäle.

Als eine **Aufgabe** der Erfindung kann angesehen werden, eine Optikanordnung und ein Lichtmikroskop bereitzustellen, mit denen bei einfachem Aufbau ein schneller Wechsel zwischen verschiedenen Gitterausrichtungen zum Erzeugen von strukturiertem Beleuchtungslicht ermöglicht wird.

Die Aufgabe wird durch die Optikanordnung mit den Merkmalen des Anspruchs 1 und ein Lichtmikroskop mit den Merkmalen des Anspruchs 14 gelöst.

Bevorzugte Ausführungsvarianten der erfindungsgemäßen Optikanordnung und des erfindungsgemäßen Lichtmikroskops sind Gegenstand der abhängigen Ansprüche und werden in der folgenden Beschreibung, insbesondere im Zusammenhang mit den Figuren, erläutert.

Eine Optikanordnung der oben genannten Art weist erfindungsgemäß eine verstellbare Umlenkeinrichtung auf zum auswählbaren Umlenken eines Lichtstrahls auf eine der optischen Baugruppen und zum Umlenken eines von dieser optischen Baugruppe kommenden Lichtstrahls in Richtung einer zu untersuchenden Probe.

Bei dem Lichtmikroskop der oben genannten Art ist erfindungsgemäß in einem Strahlengang zwischen der Lichtquelle und der Probenebene eine erfindungsgemäße Optikanordnung vorhanden.

Ein grundlegender Gedanke der Erfindung kann darin gesehen werden, dass zum Einbringen eines bestimmten Gitters in den Strahlengang des Lichtmikroskops keine Bewegung des Gitters selbst oder gar des Optikträgers mit den Gittern erforderlich ist. Wegen den vergleichsweise großen Abmessungen und Massen der Gitter sowie des Optikträgers ist eine Bewegung hiervon zeitaufwändig. Dieses Problem wird dadurch verschärft, dass die Gitter mit hoher Präzision positioniert werden müssen, um die für diese Mikroskopiemethode erforderlichen Gitterphasenverschiebungen je Gitterorientierung einzustellen. Erfindungsgemäß kann zur Auswahl einer Gitterabbildung mit bestimmter Orientierung auf ein Bewegen der Gitter verzichtet werden, indem der Strahlengang eines Lichtstrahls zum Beleuchten der Probe auswählbar auf eine der optischen Baugruppen am Optikträger verstellt wird. Die optischen Baugruppen umfassen Gitter, die bevorzugt zueinander in verschiedenen Orientierungen angeordnet sind. Eine mechanische Bewegung ist hierdurch, wenn überhaupt, allein in der Umlenkeinrichtung erforderlich. Die Bewegungen an der Umlenkeinrichtung sind entscheidend kleiner als ein Bewegen eines Gitters in den Strahlengang hinein oder aus diesem heraus, sodass mit der Umlenkeinrichtung eine Gitterauswahl in besonders kurzer Zeit erfolgen kann.

Als eine weitere Kernidee der Erfindung kann erachtet werden, dass mit der verstellbaren Umlenkeinrichtung auch der Strahlengang eines von einem der optischen Baugruppen kommenden Lichtstrahls variabel beeinflusst wird. Vorteilhafterweise kann hierdurch ein Strahlengang des Lichtstrahls von der Umlenkeinrichtung in Richtung der zu untersuchenden Probe unabhängig von der Auswahl einer optischen Baugruppe sein.

Weil der Optikträger sowie die daran angebrachten optischen Baugruppen räumlich feststehend ausgeführt sein können, ist vorteilhafterweise eine verhältnismäßig große Anzahl optischer Baugruppen am Optikträger möglich, ohne dass eine Zeitdauer zum Auswählen einer der optischen Baugruppen dadurch negativ beeinflusst wird. So kann der erste Satz von Gittern gleicher Gitterkonstante mindestens drei, oder auch mindestens fünf oder mindestens sieben Gitter aufweisen. Hierdurch kann eine hohe Messgenauigkeit bei dennoch geringer Totzeit zwischen einem Wechsel des ausgewählten Gitters erfolgen.

Eine erforderliche Zeit zur Bildaufnahme wird bei herkömmlichen Lichtmikroskopen mit einer Kombination von Bildfelddreher und Gitter durch folgende Größen bestimmt: Rotationen des Bildfelddrehers zum Erzeugen von strukturiertem Beleuchtungslicht verschiedener Orientierung haben eine Stellzeit von etwa 300ms. Mindestens 3 Rotationsstellungen müssen angefahren werden. Zudem müssen pro Orientierung vom Bildfelddreher und Gitter für 3 Phasen Bilder aufgenommen werden. Somit müssen 9 Bilder aufgenommen werden. Die Belichtungszeit zur Aufnahme eines Bildes der Probe beträgt beispielsweise 30ms. Herkömmlicherweise beträgt die Gesamtmesszeit somit in etwa 3*300ms (Rotation der Gitterabbildung) + 9*30ms (Belichtungszeit) + 9*10ms (Phasenschieben über Piezoelement), also über 1,2 Sekunden. Hingegen beträgt die Stellzeit der Umlenkeinrichtung der Erfindung nur in etwa 1ms. Hieraus folgt eine Gesamtmesszeit von nur 3*1ms (Auswahl der Gitterausrichtung) + 9*30ms (Belichtungszeit) + 9*1ms (Phasenschieben über Umlenkspiegel), also weniger als 300ms.

Jede optische Baugruppe des ersten Satzes optischer Baugruppen umfasst ein Gitter. Diese können die gleiche Gitterkonstante aufweisen.

Zum Erzeugen von strukturiertem Beleuchtungslicht unterschiedlicher Orientierungen können die Gitter zueinander in unterschiedlichen Orientierungen, das heißt Drehwinkeln um die optische Achse, angeordnet sein. Gitterlinien verschiedener Gitter sind somit relativ zueinander gedreht.

Alternativ oder zusätzlich können hinter den Gittern Bildfeldrotatoren vorhanden sein. Diese drehen eine Abbildung des jeweils zugehörigen Gitters. Dadurch können alle Gitter in gleicher Ausrichtung angeordnet sein, das heißt mit parallelen Gittervektoren. Hierbei kann eine Gitterhalterung unter Umständen mechanisch einfacher ausgeführt sein.

Mit Bildfeldrotatoren als optische Baugruppen am Optikträger kann prinzipiell ein einzelnes Gitter genügen, wenn dieses im Strahlengang vor der Umlenkeinrichtung angeordnet ist. Von dem Gitter gebeugtes Licht kann sodann auf verschiedene Strahlengänge geleitet werden, in welchen als optische Baugruppen Bildfeldrotatoren angeordnet sind. Mit diesen werden unterschiedlich gedrehte Gitterabbildungen an der Probenebene erzeugt.

Bei einer bevorzugten Ausführung der erfindungsgemäßen Optikanordnung ist am Optikträger zusätzlich mindestens eine der folgenden optischen Baugruppen angeordnet:
- mindestens ein weiterer Satz von Gittern zum Erzeugen von strukturiertem Beleuchtungslicht, wobei ein weiterer Satz von Gittern jeweils mindestens drei Gitter aufweist, die eine gleiche Gitterkonstante haben und insbesondere in unterschiedlichen Winkeln zueinander angeordnet sind, wobei sich verschiedene Sätze von Gittern in ihren Gitterkonstanten unterscheiden,
- zusätzliche Bildfeldrotatoren zum Erzeugen verschieden orientierter Gitterabbildungen, wobei im Strahlengang vor der Umlenkeinrichtung ein Gitter angeordnet ist und von diesem Gitter kommendes Licht über die Umlenkeinrichtung auswählbar auf einen der Bildfeldrotatoren leitbar ist,
- ein Rückleitspiegel zum Bereitstellen einer Weitfeldbeleuchtung, wobei ein von der Umlenkeinrichtung kommender Lichtstrahl mit dem Rückleitspiegel zurück auf die Umlenkeinrichtung leitbar ist, und
- ein Fenster zum Durchlassen des Lichtstrahls, der von der Umlenkeinrichtung kommt, wobei Strahlführungsmittel zum Leiten des durchgelassenen Lichtstrahls zur Umlenkeinrichtung vorhanden sind.

Herkömmliche Optikanordnungen verwenden in der Regel nur Gitter einer einzigen Gitterkonstante, weil bei diesen Ausführungen eine größere Anzahl an Gittern entweder zu einem unverhältnismäßig komplizierten Aufbau oder zu erhöhten Totzeiten beim Gitterwechsel führt. Im Gegensatz hierzu können bei der erfindungsgemäßen Optikanordnung weitere Sätze von Gittern mit anderen Gitterkonstanten vorhanden sein, ohne dass hierdurch der Fertigungsaufwand oder Totzeiten signifikant steigen würden. Bei Mehrfarbmessungen kann somit derjenige Satz von Gittern, der für die jeweilige Anregungswellenlänge die geeignetste Gitterkonstante aufweist, ausgewählt werden. Verschiedene Sätze von Gittern können auch auswählbar sein, indem mehrere austauschbare Optikträger vorgesehen sind. Ein Wechsel zwischen diesen Optikträgern kann beispielsweise für eine Experimentänderung vorteilhaft sein. Weil hierbei eine erforderliche Wechselzeit zwischen den Optikträgern eine untergeordnete Rolle spielt, kann der Wechsel manuell oder durch motorisches Verfahren der Optikträger erfolgen.

Wird am Optikträger ein Rückleitspiegel oder ein Fenster vorgesehen, ist ein schneller Wechsel zu unstrukturiertem Beleuchtungslicht möglich. Somit kann zusätzlich zur Untersuchung mit strukturierter Beleuchtung auf ein Probenbild mit Weitfeldbeleuchtung, insbesondere einer Weitfeld-Epi-Beleuchtung, aufgenommen werden.

Werden Transmissionsgitter benutzt, so ist zum Bereitstellen einer Weitfeldbeleuchtung bevorzugt ein Fenster vorgesehen. Dieses kann beispielsweise durch ein Plättchen mit ebenen Flächen, eine Linse, eine Linsengruppe oder ein Loch gebildet sein. Die hinter den Fenstern angeordneten Strahlführungsmittel zum Leiten des Lichtstrahls auf die Umlenkeinrichtung können beispielsweise einen oder mehrere Spiegel, Linsen oder Linsengruppen sowie einen drehbaren Ausgangsspiegel umfassen, der abhängig von einer Einstellung der Umlenkeinrichtung gedreht wird. Bevorzugt ist der Ausgangsspiegel als eine Spiegelrückseite eines Umlenkspiegels der Umlenkeinrichtung ausgeführt, so dass der Ausgangsspiegel und der Umlenkspiegel gemeinsam drehbar sind.

Bei einer Ausführung der Gitter als Reflexionsgitter ist zum Bereitstellen einer Weitfeldbeleuchtung die Verwendung eines Rückleitspiegel bevorzugt. Dieser kann eine Ebene oder auch eine gekrümmte Oberfläche aufweisen.

Zudem können weitere Sätze von Gittern am Optikträger vorhanden sein, vor denen jeweils eine Platte definierter Dicke zur Fokusverschiebung angeordnet ist. Werden an verschiedenen Gittern Platten unterschiedlicher Dicke angebracht, kann hiermit ein Tiefenscan in diskreten Schritten erfolgen.

Es ist bevorzugt, dass die Gitter in einer zweidimensionalen Anordnung nebeneinander auf dem Optikträger positioniert sind. Mit der Umlenkeinrichtung kann entsprechend einer Umlenkrichtung eines auftreffenden Lichtstrahls auf ein beliebiges Gitter erfolgen. Sind weitere optische Baugruppen am Optikträger vorhanden, sind auch diese in der zweidimensionalen Anordnung positioniert. Prinzipiell können die Gitter zwar auch in einer einzigen geraden oder gekrümmten Reihe angeordnet sein, durch eine zweidimensionale Anordnung sind aber vorteilhafterweise die Unterschiede in den Umlenkwinkeln zum Auswählen eines Gitters für eine vorgegebene Anzahl an Gittern kleiner. Durch kleinere Unterschiede in den Umlenkwinkeln können zum einen kleinere Optiken verwendet werden, zum anderen sind die Unterschiede in den Laufwegen eines Lichtstrahls von der Umlenkeinrichtung zu den verschiedenen Gittern geringer. Dadurch kann weitestgehend vermieden werden, dass nur einige der Gitter in beispielsweise einer Zwischenbildebene des Lichtmikroskops positioniert sind, während sich andere Gitter außerhalb der Zwischenbildebene befinden.

Um Unterschiede in den Laufwegen von der Umlenkeinrichtung zu den verschiedenen Gittern weiter zu reduzieren, können zudem die Gitter relativ zueinander in Ausbreitungsrichtung eines von der Umlenkeinrichtung kommenden Lichtstrahls versetzt sein. Dieser Versatz kann gerade so gewählt sein, dass alle Lichtlaufwege von der Umlenkeinrichtung zu den Gittern gleich lang sind. So ist eine präzise Anordnung aller Gitter in einer Zwischenbildebene möglich.

Die Umlenkeinrichtung kann grundsätzlich beliebige schnell schaltbare Mittel zum variablen Ändern einer Umlenkrichtung umfassen, beispielsweise eine akustooptische Vorrichtung oder eine drehbare oder verschiebbare lichtbrechende Einrichtung. Ein besonders schnelles Umschalten wird mit einer Umlenkeinrichtung erreicht, die einen Umlenkspiegel aufweist. Dieser kann auch als Scanspiegel bezeichnet werden und beispielsweise durch einen MEMS-Scanner ausgeführt sein. Dabei steht MEMS für mikroelektromechanisches System. Dieser Scanspiegel kann das einzige bewegliche Element zum Auswählen eines Gitters sein. Zweckmäßiger Weise sind elektronische Steuerungsmittel vorhanden und dazu eingerichtet, zum Leiten des Lichtstrahls auf ein gewünschtes Gitter oder eine andere optische Baugruppe den Umlenkspiegel zu drehen und/oder zu verschieben. Prinzipiell können auch zwei Umlenkspiegel hintereinander vorgesehen sein, womit eine Auswahl aus einer größeren Anzahl an Gittern möglich wird.

Umlenkspiegel bieten den Vorteil, dass eine zu bewegende Komponente verhältnismäßig klein ist und daher schnell bewegt werden kann.

Bei einer bevorzugten Ausführungsvariante der erfindungsgemäßen Optikanordnung sind die Gitter Reflexionsgitter zum Zurückwerfen eines auftreffenden Lichtstrahls zu den Umlenkspiegeln. Somit lenkt derselbe Umlenkspiegel auch den zurückkommenden Lichtstrahl um. Wegen des zweimaligen Umlenkens können unter Umständen geringfügige Positionierungenauigkeiten des Umlenkspiegels ausgeglichen werden.

Wird ein Umlenkspiegel in einer Descan-Anordnung verwendet, das heißt, er leitet einen Lichtstrahl zum Optikträger hin und von diesem zurück, können die Strahlengänge des eingehenden und ausgehenden Lichtstrahls auch auf der Seite des Umlenkspiegels, die dem Optikträger abgewandt ist, übereinstimmen. Insbesondere für diesen Fall kann ein Strahlteiler vorhanden sein zum Leiten eines Lichtstrahls, der von einer Lichtquelle des Lichtmikroskops kommt, in Richtung zur Umlenkeinrichtung und zum Leiten eines Lichtstrahls, der von der Umlenkeinrichtung kommt, in Richtung der zu untersuchenden Probe.

Grundsätzlich kann der Strahlteiler beliebiger Art sein und beispielsweise einen Farbstrahlteiler oder einen Strahlteiler mit räumlich verschiedenen Transmissions- und Reflexionseigenschaften umfassen. Bevorzugt ist der Strahlteiler jedoch ein Polarisationsstrahlteiler.

Damit am Polarisationsstrahlteiler Lichtstrahlen, die von einer Lichtquelle des Lichtmikroskops kommen, von Lichtstrahlen unterscheidbar sind, die von der Umlenkeinrichtung kommen, sind bevorzugt polarisationsändernde Mittel zwischen dem Polarisationsstrahlteiler und dem Optikträger vorhanden. Bei den polarisationsändernden Mitteln kann es sich beispielsweise um eine λ/4-Platte oder λ/2-Platte handeln.

Ein von der Lichtquelle des Lichtmikroskops kommender Lichtstrahl soll mit einer gewünschten Polarisierung auf den Polarisationsstrahlteiler treffen und so zur Umlenkeinrichtung und nicht direkt in Richtung der Probe weitergeleitet werden. Hierzu können polarisationsbeeinflussende Mittel zum Einstellen einer bestimmten Polarisationsrichtung zwischen der Lichtquelle und dem Polarisationsstrahlteiler vorhanden sein. Die polarisationsbeeinflussenden Mittel können einen Polarisator oder Polarisationsfilter und/oder eine λ/2-Platte zum Ändern einer Polarisationsrichtung eines von der Lichtquelle kommenden Lichtstrahls entsprechend den Trenneigenschaften des Polarisationsstrahlteilers aufweisen.

Bei einer weiteren Ausführungsvariante der erfindungsgemäßen Optikanordnung sind die polarisationsbeeinflussenden Mittel, die im Strahlengang vor dem Polarisationsstrahlteiler angeordnet sind, schaltbar. Beispielsweise können sie einen schaltbaren Polarisationsfilter oder eine drehbare λ/2-Platte aufweisen. Damit ist auswählbar, ob der Lichtstrahl vom Polarisationsstrahlteiler zur Umlenkeinrichtung oder ohne auf die Umlenkeinrichtung zu treffen in Richtung der Probe geleitet wird.

Bei einer Weiterleitung zur Umlenkeinrichtung wird die Polarisationsrichtung des Lichts durch polarisationsändernde Mittel zwischen dem Polarisationsstrahlteiler und dem Optikträger gedreht, bevor das Licht zurück auf den Polarisationsstrahlteiler gelangt. Daher wird in diesem Fall Licht am Polarisationsstrahlteiler zuerst transmittiert und zurückkommend reflektiert, oder umgekehrt, um schließlich zur Probe zu gelangen.

Erfolgt am Polarisationsstrahlteiler eine Weiterleitung in Richtung der Probe, wird Licht aufgrund seiner Polarisationsrichtung nicht in Richtung des Umlenkspiegels, sondern auf einen anderen Strahlengang weitergeleitet. Auf diesem wird über polarisationsändernde Mittel die Polarisationsrichtung gedreht und das Licht wird zurück zum Polarisationsstrahlteiler geleitet. Beispielsweise können als polarisationsändernde Mittel eine λ/4-Platte oder eine λ/2-Platte eingesetzt werden, auf welche ein Spiegel folgt. Durch den Spiegel wird die λ/4-Platte zweimal durchlaufen, so dass die Polarisationsrichtung des Lichts um 90° gedreht sein kann, wenn es vom Spiegel zurückkommend erneut auf den Polarisationsstrahlteiler trifft. Daher wird Licht in diesem Fall am Polarisationsstrahlteiler zuerst reflektiert und zurückkommend transmittiert, oder umgekehrt, um zur Probe zu gelangen. Hierdurch wird eine Manipulation des Lichtstrahls durch die Gitter vermieden. So kann eine Weitfeldbeleuchtung bereitgestellt werden, wobei ein Umschalten zu strukturierter Beleuchtung über den schaltbaren Polarisationsfilter oder die λ/2-Platte vor der Umlenkeinrichtung in kurzer Zeit und mit nur geringen Lichtverlusten möglich ist. Alternativ ist ein schnelles Umschalten zwischen strukturierter Beleuchtung und Weitfeldbeleuchtung bei den beschriebenen Ausführungen mit Rückleitspiegel am Optikträger möglich.

Bei Verwendung eines Polarisationsstrahlteilers sind weitere polarisationsändernde Mittel zwischen dem Polarisationsstrahlteiler und der zu untersuchenden Probe angeordnet. Prinzipiell kann hiermit die polarisationsändernde Wirkung von dem Polarisator vor dem Strahlteiler und den zwischen dem Strahlteiler und dem Optikträger angeordneten polarisationsändernden Mitteln kompensiert werden. Dadurch kann die Polarisierung eines Lichtstrahls beim Verlassen der Optikanordnung in Richtung der Probe mit der Polarisierung beim Eintreten in die Optikanordnung übereinstimmen. Vorzugsweise sind diese polarisationsändernden Mittel als schnell schaltbare Polarisationsdreher ausgeführt, beispielsweise mit einer drehbaren λ/2-Platte oder einem schaltbaren Flüssigkristallbereich. Elektronische Steuerungsmittel sind vorhanden und dazu eingerichtet, den schaltbaren Polarisationsdreher zur Optimierung eines Modulationskontrasts in der Probenebene abhängig von einer Gitterorientierung des momentan ausgewählten Gitters einzustellen.

Alternativ zu Reflexionsgittern können Gitter am Optikträger auch Transmissionsgitter sein. Anstelle einer Descan-Nutzung des Umlenkspiegels kann hier vorgesehen sein, dass die Umlenkeinrichtung einen Umlenkspiegel und einen Ausgangsspiegel aufweist, dass mit dem Umlenkspiegel ein Lichtstrahl, der von einer Lichtquelle des Lichtmikroskops kommt, auf den Optikträger umlenkbar ist, dass die Gitter Transmissionsgitter sind zum Durchlassen eines von dem Umlenkspiegel kommenden Lichtstrahls in Richtung des Ausgangsspiegels, dass mit dem Ausgangsspiegel ein vom Optikträger kommender Lichtstrahl in Richtung der Probe umlenkbar ist und dass elektronische Steuerungsmittel vorhanden und dazu eingerichtet sind, den Ausgangsspiegel gemeinsam mit dem Umlenkspiegel zu drehen und/oder zu verschieben.

Vorteilhafterweise ist hierdurch kein Strahlteiler erforderlich, um einen Lichtstrahl in Richtung des Optikträgers von einem Lichtstrahl, der vom Optikträger kommt, räumlich zu trennen.

Um eine schnelle Gitterauswahl zu ermöglichen, werden der Umlenkspiegel und der Ausgangsspiegel synchron verstellt. Dies kann besonders effizient realisiert werden, wenn der Ausgangsspiegel und der Umlenkspiegel zum gemeinsamen Drehen oder Verschieben an einer gemeinsamen Halterung befestigt sind, welche über die elektronischen Steuerungsmittel gedreht und/oder verschoben wird. Damit die Halterung mit den beiden Spiegeln ein kleines Drehmoment aufweist, ist der Ausgangsspiegel bevorzugt als Rückseite des Umlenkspiegels gebildet.

Besonders flexible Einsatzmöglichkeiten sind bei Ausführungen einer erfindungsgemäßen Optikanordnung eröffnet, bei denen die Gitter und übrige optische Baugruppen am Optikträger austauschbar gehalten sind und/oder eine Optikträgerhalterung zum austauschbaren Halten des Optikträgers vorhanden ist. Somit kann der Optikträger mit denjenigen Gittern bestückt werden, die für die jeweils verwendete Lichtquelle oder verwendeten Lichtquellen geeignet sind. Ein austauschbares Halten kann beispielsweise durch eine mechanische Steck- oder Schraubverbindung oder auch durch eine magnetische Fixierung erfolgen.

Bevorzugt sind weiterhin Ausführungsvarianten der erfindungsgemäßen Optikanordnung, bei denen optische Fokussiermittel zwischen der Umlenkeinrichtung und dem Optikträger vorhanden sind, um für verschiedene Umlenkwinkel der Umlenkeinrichtung die jeweiligen Lichtstrahlen unter gleichen Winkeln auf das entsprechende Gitter oder eine andere optische Baugruppe des Optikträgers zu leiten. Bei den optischen Fokussiermitteln kann es sich insbesondere um eine oder mehrere Linsen oder Linsengruppen handeln. Grundsätzlich können aber auch Spiegel oder eine Kombination von Linsen und Spiegeln verwendet werden. Die optischen Fokussiermittel dienen hier auch einem Umlenken eines von der Umlenkeinrichtung kommenden Lichtstrahls. Dadurch können die Lichtstrahlen zwischen den optischen Fokussiermitteln und dem Optikträger parallel zueinander verlaufen, unabhängig von dem Umlenkwinkel der Umlenkeinrichtung.

Bevorzugt wird durch die optischen Fokussiermittel ein Lichtstrahl mit einer Hauptausbreitungsrichtung senkrecht auf das ausgewählte Gitter geleitet. Bevorzugt werden mit verschiedenen Umlenkwinkeln Lichtstrahlen auf dieselben Linsen und/oder Spiegel der optischen Fokussiermittel geleitet, allerdings an verschiedenen Bereichen von diesen. Bevorzugt ist hierfür ein Querschnitt der Linsen und/oder Spiegel der optischen Fokussiermittel mindestens doppelt so groß wie ein Querschnittsflächendurchmesser des Lichtstrahls an den optischen Fokussiermitteln. Lichtstrahlen, die in verschiedenen Umlenkwinkeln auf die optischen Fokussiermittel treffen, können hierdurch parallel und räumlich beabstandet zueinander zum Optikträger geleitet werden.

Bevorzugt sind die optischen Fokussiermittel und die Umlenkeinrichtung so angeordnet, dass ein Lichtstrahl, der von einem der Gitter oder einer anderen optischen Baugruppe zurückkommt, von den optischen Fokussiermitteln zu der Umlenkeinrichtung und weiter in Richtung der Probe geleitet wird. Somit kommt den optischen Fokussiermitteln auch beim Zurückleiten eines Lichtstrahls eine Umlenkfunktion abhängig von dem Umlenkwinkel der Umlenkeinrichtung zu.

Eine weitere Geschwindigkeitsverbesserung in der Bildaufnahme kann erreicht werden, wenn ein bestimmter Probenbereich nacheinander auf verschiedene Kamerabereiche einer Kamera abgebildet wird. Mit jedem Auslesevorgang der Kamera werden somit mehrere Probenbilder ausgelesen, die zeitlich nacheinander auf verschiedenen Kamerabereichen erzeugt wurden.

Bei dieser Ausführung ist mindestens eine Kamera zum Aufzeichnen einer Abbildung eines Probenbereichs vorhanden und zwischen der Probenebene und der Kamera ist ein Scanspiegel angeordnet. Elektronische Steuerungsmittel sind dazu eingerichtet, mit dem Scanspiegel denselben Probenbereich nacheinander auf verschiedene Bereiche der Kamera abzubilden.

Der Scanspiegel kann in gleicher Weise wie der Umlenkspiegel vor dem Optikträger ausgeführt sein. Zudem können zwischen dem Scanspiegel und der Kamera ebenfalls optische Fokussiermittel vorhanden sein, die gleich wie die optischen Fokussiermittel zwischen dem Umlenkspiegel und dem Optikträger ausgeführt sein können. Zweckmäßigerweise sind die elektronischen Steuerungsmittel dazu eingerichtet, den Scanspiegel und den Umlenkspiegel zu gleichen Zeitpunkten umzuschalten. So können auf den verschiedenen Kamerabereichen Bilder zu verschiedenen optischen Baugruppen am Optikträger erzeugt werden.

Durch die Aufteilung in mehrere Kamerabereiche wird für jedes Probenbild nur ein Anteil aller verfügbaren Bildpixel der Kamera genutzt. Zweckmäßigerweise kann daher vorgesehen sein, dass hier ein kleinerer Probenbereich beleuchtet wird als bei einem Betrieb, in dem alle Bildpixel der Kamera zur Aufnahme eines einzigen Probenbilds genutzt werden. Die Beleuchtung dieses kleineren Probenbereichs kann erreicht werden, indem mindestens ein zusätzlicher Rückleitspiegel am Optikträger vorhanden ist, dessen reflektierender Bereich kleiner ist als bei dem zuvor beschriebenen Rückleitspiegel. Indem der Optikträger in einer Zwischenbildebene angeordnet ist, werden nur die reflektierenden Bereiche in der Probenebene abgebildet und folglich wird nur ein kleinerer Probenbereich beleuchtet. Dieser interessierende Bereich kann auch als Region-of-Interest bezeichnet werden.

In entsprechender Weise können weitere Gitter und/oder Fenster am Optikträger vorhanden sein, deren Breiten und/oder Höhen geringer sind als bei den übrigen Gittern und/oder dem übrigen Fenster.

Die Auslesezeit der Kamera kann auch reduziert werden, wenn nur ein Teil aller Bildpixel der Kamera ausgelesen werden.

Zudem kann eine Fokussieroptik oder ein Kollimator zum Leiten des Lichtstrahls auf die Umlenkeinrichtung vorhanden sein. Bevorzugt sind die elektronischen Steuerungsmittel dazu eingerichtet, die Fokussieroptik in Ausbreitungsrichtung des auftreffenden Lichts zu verschieben und/oder eine Brennweite der Fokussieroptik zu verstellen. Hierdurch kann eine Axialverschiebung der Fokuslage des Lichts erreicht werden. Alternativ kann eine Axialverschiebung auch erreicht werden, indem die Umlenkeinrichtung, der Optikträger sowie alle dazwischen liegenden Bauteile gemeinsam in die Richtung verschoben werden, in welcher Licht auf die Umlenkeinrichtung trifft.

Die elektronischen Steuerungsmittel können auch dazu eingerichtet sein, die Umlenkeinrichtung und die Fokussieroptik in Ausbreitungsrichtung des auftreffenden Lichtstrahls gemeinsam zu verschieben. So kann eine Fokuslage des Lichts in einer Pupillenebene des Lichtmikroskops lateral verschoben werden. Dies kann beispielsweise abhängig von einer Objektivauswahl am Lichtmikroskop erfolgen.

Durch eine Verschiebung des Lichtstrahls in der Objektivpupille kann beispielsweise eine geeignete Beleuchtung für die interne Totalreflektionsfluoreszenzmikroskopie (TIRF) eingestellt werden. Für dieses Mikroskopieverfahren kann es zudem vorteilhaft sein, wenn eine der optischen Baugruppen am Optikträger ein Bildfeldrotator ist.

Bevorzugt kann mit jeder Gitterposition zusätzlich eine Phasenschiebung erfolgen. Hierunter soll eine Verschiebung der Abbildung des Gitters in der Probenebene quer zu einer Richtung der Gitterlinien verstanden werden. Die Verschiebung kann zweckmäßigerweise kleiner als ein Abstand zwischen benachbarten Gitterlinien sein. Zum Ändern einer strukturierten Beleuchtung, die mit einem der Gitter erzeugt wird, kann daher ein Stellelement oder Motor zum Bewegen des Gitters vorhanden sein. Das Stellelement kann beispielsweise ein piezoelektrischer Aktuator sein, mit dem eine Positionssteuerung in zwei Dimensionen möglich ist. Bevorzugt sind alle Gitter auf einer gemeinsamen Halterung angeordnet und die Halterung ist über den Motor bewegbar. So reicht bereits ein einziger Motor oder piezoelektrischer Aktuator zum Bewegen aller Gitter.

Alternativ oder zusätzlich können zur Phasenschiebung je Gitterposition auch elektronische Steuerungsmittel zum Verschieben oder Neigen des Umlenkspiegels vorgesehen sein. Beispielsweise kann Licht nacheinander in mindestens drei verschiedenen Umlenkwinkeln auf dasselbe Gitter geleitet werden. Weiterhin kann eine Phasenschiebung dadurch erreicht werden, dass ein optisch-brechendes Mittel zwischen der Umlenkeinrichtung und dem Optikträger vorhanden ist und das elektronische Steuerungsmittel vorhanden und zum motorischen Bewegen des optisch-brechenden Mittels eingerichtet sind, um die mit einem der Gitter bereitgestellte strukturierte Beleuchtung zu ändern. Das optisch-brechende Mittel kann beispielsweise eine Platte oder Wackelplatte sein, die über die elektronischen Steuerungsmittel verkippt wird, oder ein Keil, der über die elektronischen Steuerungsmittel verschoben wird. Die Verschiebung oder Verkippung erfolgt in einer Richtung, durch die der Lichtstrahl am Gitter in einer Richtung quer zu einer Gitterlinienrichtung verschoben wird.

Bei einer bevorzugten Ausführungsvariante des erfindungsgemäßen Lichtmikroskops ist der Optikträger in einer Zwischenbildebene oder einer hierzu konjugierten Ebene des Lichtmikroskops angeordnet. Somit erfolgt eine scharfe Abbildung des ausgewählten Gitters in der Probenebene.

Weitere Vorteile und Merkmale der Erfindung werden nachstehend mit Bezug auf die beigefügten schematischen Figuren beschrieben. Hierin zeigen:
- Fig. 1:: eine schematische Darstellung eines Ausführungsbeispiels eines erfindungsgemäßen Lichtmikroskops mit einer erfindungsgemäßen Optikanordnung;
- Fig. 2:: eine schematische Darstellung eines Optikträgers der Optikanordnung aus Fig. 1 und
- Fig. 3:: eine schematische Darstellung eines weiteren Ausführungsbeispiels eines erfindungsgemäßen Lichtmikroskops mit einer erfindungsgemäßen Optikanordnung.

Gleiche und gleichwirkende Komponenten sind in den Figuren in der Regel mit denselben Bezugszeichen gekennzeichnet.

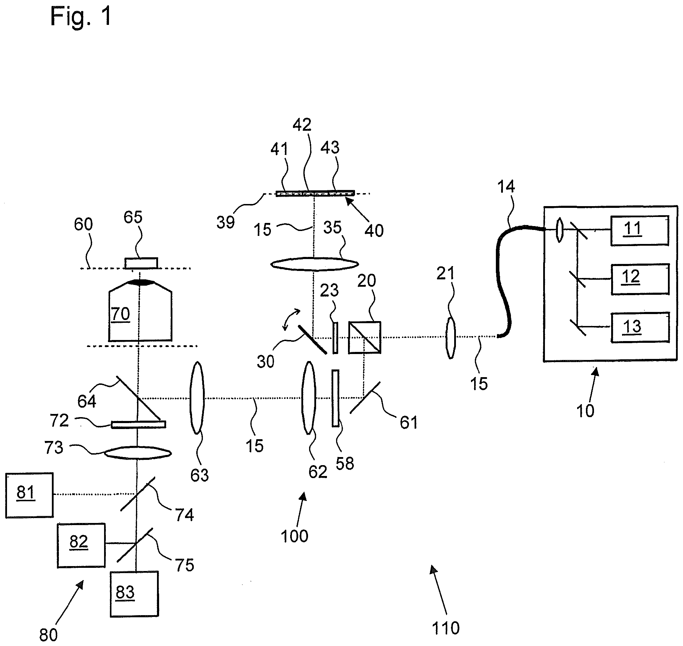

Fig. 1 zeigt schematisch ein Ausführungsbeispiel eines erfindungsgemäßen Lichtmikroskops 110. Als wesentliche Komponenten weist das Lichtmikroskop 110 eine Lichtquelle 10 zum Aussenden von Beleuchtungslicht, eine erfindungsgemäße Optikanordnung 100 zum Erzeugen von strukturierter Beleuchtung, eine Probenebene 60, an der eine Probe 65 positioniert werden kann, und eine Detektoreinrichtung 80 auf.

Im vorliegenden Beispiel umfasst die Lichtquelle 10 mehrere Lasermodule 11, 12, 13, die Licht verschiedener Wellenlängen aussenden können. Über wellenlängenabhängige Strahlteiler können die Lichtstrahlen dieser Lasermodule 11, 12, 13 auf einen gemeinsamen Strahlengang und über beispielsweise eine Lichtleitfaser 14 zu der Optikanordnung 100 geleitet werden.

Die Optikanordnung 100 umfasst als zentrale Elemente eine Umlenkeinrichtung 30 und einen Optikträger 40. An diesem sind mehrere Gitter 41 bis 43 in verschiedener Ausrichtung zueinander angeordnet. Mit der Umlenkeinrichtung 30 kann ein Lichtstrahl 15, der von der Lichtquelle 10 kommt, auswählbar in verschiedenen Umlenkwinkeln zum Optikträger 40 weitergeleitet werden, sodass der Lichtstrahl 15 abhängig vom Umlenkwinkel auf eines der Gitter 41 bis 43 trifft. Bevorzugt weist für diese Auswahl die Umlenkeinrichtung 30 einen Umlenkspielgel 30 auf, der über elektronische Steuerungsmittel der Optikanordnung 100 drehbar ist. Prinzipiell ist es auch möglich, dass der Umlenkspiegel 30 aus mehreren nebeneinander angeordneten Spiegeln gebildet ist, deren Umlenkrichtung gemeinsam verstellt wird.

Im Unterschied zum Stand der Technik ist für die Auswahl eines Gitters kein Verschieben des Gitters notwendig. Stattdessen wird ein Strahlengang des Lichtstrahls 15 verändert. Indem die Umlenkeinrichtung 30 hierfür lediglich bewegliche Komponenten kleiner Abmessungen und Maße benötigt, ist die erforderliche Zeit zum Wechseln eines ausgewählten Gitters, das heißt zum Verstellen des Umlenkwinkels, besonders gering. Der Umlenkspiegel 30 umfasst bevorzugt ein mikroelektromechanisches System (MEMS), welches besonders schnell zwischen verschiedenen Zuständen schalten kann.

Es ist bevorzugt, dass ein Lichtstrahl oder ein Strahlenbündel 15 mit seiner Hauptausbreitungsrichtung senkrecht auf eines der Gitter 41 bis 43 trifft, unabhängig von der Auswahl des Gitters 41 bis 43. Somit soll ein Einfallswinkel des Lichtstrahls 15 auf den Gittern 41 bis 43 unabhängig vom Umlenkwinkel der Umlenkeinrichtung 30 sein. Dies wird mit optischen Fokussiermitteln 35 erreicht, die zwischen der Umlenkeinrichtung 30 und dem Optikträger 40 angeordnet sind. Die optischen Fokussiermittel 35 können eine oder mehrere hinter- oder nebeneinander angeordnete Linsen umfassen, welche im Gesamten eine lichtsammelnde Wirkung haben. Abhängig vom Umlenkwinkel durchläuft ein Strahlenbündel 15 die optischen Fokussiermittel 35 in verschiedenen Bereichen, wodurch die optischen Fokussiermittel 35 außer einer lichtsammelnden Wirkung auch eine Richtungsänderung abhängig vom Umlenkwinkel ausüben. Bevorzugt ist die Umlenkeinrichtung 30 in einem Fokusbereich der optischen Fokussiermittel 35 positioniert. Dadurch verlaufen Strahlenbündel 15 zwischen den optischen Fokussiermitteln 35 und dem Optikträger 40 für verschiedene Umlenkwinkel der Umlenkeinrichtung 30 im Wesentlichen parallel und versetzt zueinander.

Bei der dargestellten Ausführungsvariante wird derselbe Umlenkspiegel 30 zum Leiten von Licht 15 zu dem Optikträger 40 hin und auch zum Leiten des Lichts 15 von dem Optikträger 40 zurück und weiter in Richtung der Probe 65 genutzt. Damit Licht 15, das vom Optikträger 40 zurückkommend über die Umlenkeinrichtung 30 weitergeleitet wird, nicht zu der Lichtquelle 10, sondern zu der Probe 65 gelangt, ist ein Strahlteiler 20 im Strahlengang zwischen der Lichtquelle 10 und der Umlenkeinrichtung 30 angeordnet. Im dargestellten Beispiel ist der Strahlteiler 20 ein Polarisationsstrahlteiler. Von der Umlenkeinrichtung 30 zurückkommendes Licht 15 hat aufgrund von polarisationsändernden Mitteln 23, die zwischen dem Polarisationsstrahlteiler 20 und dem Optikträger 40 angeordnet sind, eine geänderte Polarisation und wird vom Polarisationsstrahlteiler 20 in Richtung der Probe 65 weitergeleitet.

Dabei durchläuft das Licht 15 schnell schaltbare polarisationsändernde Mittel 58. Diese sind als Polarisationsdreher 58, beispielsweise als λ/2-Platte oder bevorzugt als schaltbarer Flüssigkristallbereich ausgeführt, welcher innerhalb weniger Millisekunden zur Änderung der Polarisationsrichtung des transmittierten Lichts 15 schaltbar ist. Über elektronische Steuerungsmittel kann der Polarisationsdreher 58 eine Polarisationsrichtung abhängig vom jeweils ausgewählten Gitter 41 bis 55 einstellen. Dadurch wird der Modulationskontrast in der Probenebene optimiert.

Um eine axiale Fokuslage des Lichts 15 zu ändern, können elektronische Steuerungsmittel dazu eingerichtet sein, die Fokussieroptik 21, die vor dem Strahlteiler 20 angeordnet ist, in Ausbreitungsrichtung des auftreffenden Lichts 15 zu verschieben. Alternativ können der Umlenkspiegel 30, die optischen Fokussiermittel 35 und der Optikträger 40 gemeinsam in dieselbe Richtung verschoben werden.

Eine laterale Verschiebung des Lichts 15 in der Objektivpupille kann erreicht werden, indem die Fokussieroptik 21 und der Umlenkspiegel 30 gemeinsam in Ausbreitungsrichtung des auftreffenden Lichts 15 verschoben werden.

Vom Polarisationsstrahlteiler 20 in Richtung der Probe 65 weitergeleitetes Licht 15 wird über weitere optische Mittel 61 bis 64 in ein Objektiv 70 geleitet, welches das Licht 15 als Beleuchtungslicht auf die Probenebene 60 fokussiert. In dieser kann eine Probe 65 gehalten werden, welche Detektionslicht aussendet. Dieses wird über das Objektiv 70 zu einem Strahlteiler 64 geleitet, welcher Beleuchtungslicht von Detektionslicht spektral trennt. Das Detektionslicht wird über weitere optische Mittel 72 und 73 zu einer Detektoreinrichtung 80 geführt. Im dargestellten Beispiel weist die Detektoreinrichtung 80 mehrere Kameras 81, 82, 83 auf, zu welchen das Detektionslicht abhängig von seiner Wellenlänge mit dichroitischen Strahlteilern 74, 75 geleitet wird.

Beim dargestellten Beispiel kann die Probe nacheinander mit strukturiertem Beleuchtungslicht verschiedener Wellenlängen bestrahlt werden. Zudem müssen pro Wellenlänge für die Nutzung der strukturierten Beleuchtung mehrere Bilder sequenziell aufgenommen werden. Trotz dieser hohen Anzahl aufzunehmender Bilder ist der erforderliche Zeitaufwand aufgrund der Optikanordnung 100 mit dem Umlenkspiegel 30 und dem Optikträger 40 besonders gering.

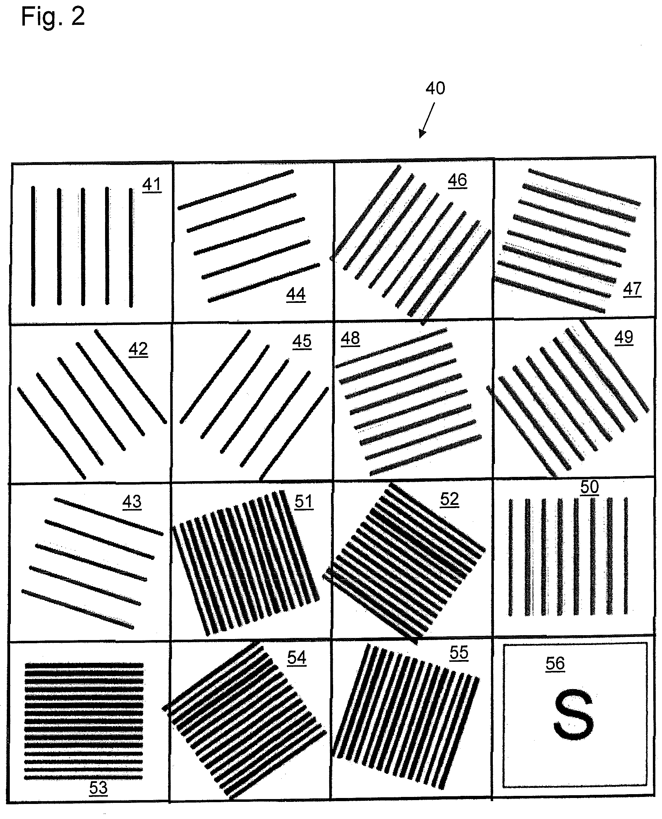

Eine beispielhafte Ausführung eines Optikträgers 40 ist schematisch in Fig. 2 gezeigt. Verschiedene Gitter 41 bis 55 zum Erzeugen einer strukturierten Beleuchtung sowie ein Rückleitspiegel 56 zum Bereitstellen einer Weitfeldbeleuchtung sind an dem Optikträger 40 angebracht. Bei dieser Ausführung sind die Gitter 41 bis 55 Reflexionsgitter, um einen auftreffenden Lichtstrahl als strukturierte Beleuchtung zurück zur Umlenkeinrichtung zu werfen.

Alternativ können die Gitter aber auch Transmissionsgitter sein. In diesem Fall wird anstelle des Rückleitspiegels ein Fenster zum Bereitstellen einer Weitfeldbeleuchtung genutzt.

Die Gitter 41 bis 55 sowie der Rückleitspiegel 56 sind direkt nebeneinander in einer zweidimensionalen Anordnung positioniert. Somit kann durch geringe Änderungen des Umlenkwinkels in zwei Dimensionen jede dieser optischen Baugruppen 41 bis 55 ausgewählt werden.

Im dargestellten Fall sind mehrere Sätze von Gittern vorhanden, die sich in ihren Gitterkonstanten, das heißt Linienabständen, unterscheiden. Abhängig von der Wellenlänge des genutzten Beleuchtungslichts wird ein bestimmter Satz von Gittern ausgewählt. Ein erster Satz mit den Gittern 41 bis 45 hat große Linienabstände, ein zweiter Satz mit den Gittern 46 bis 50 weist mittelgroße Linienabstände auf und ein dritter Satz von Gittern 51 bis 55 ist mit geringen Linienabständen gebildet. Die Gitter innerhalb eines Satzes haben zueinander verschiedene Orientierungen, sodass für jede der genannten Linienabstände eine strukturierte Beleuchtung in verschiedenen Richtungen erzeugt werden kann.

Bevorzugt ist der Optikträger 40 austauschbar an einer Halterung angebracht, sodass bei einem Wechsel der Wellenlänge des Beleuchtungslichts auch zu einem Satz von Gittern mit geeigneter Gitterkonstante gewechselt werden kann.

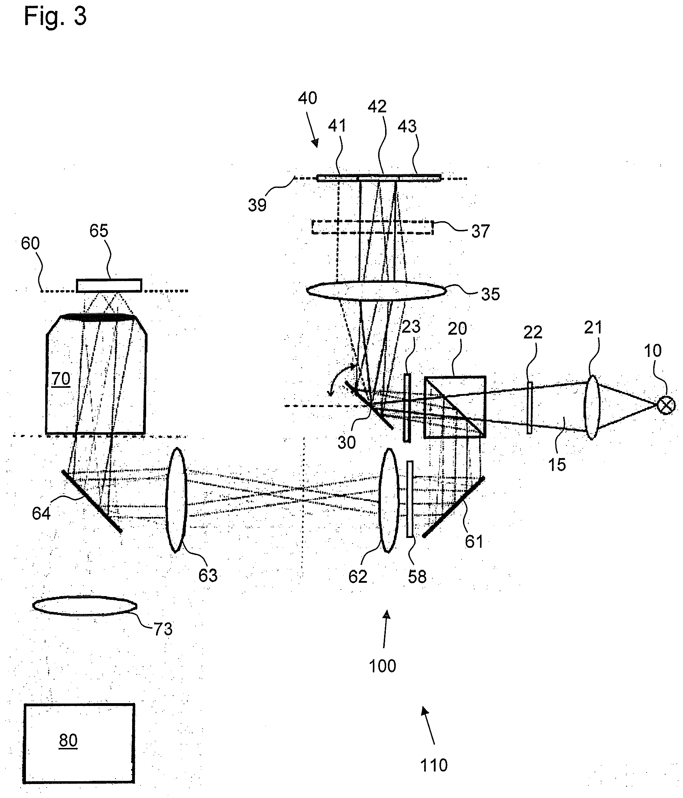

Ein weiteres Ausführungsbeispiel eines erfindungsgemäßen Lichtmikroskops 110 ist schematisch in Fig. 3 gezeigt. Hier wird eine Lichtquelle 10 verwendet, die nichtpolarisiertes Licht abstrahlt. Dieses wird mit einem Polarisator 22 so polarisiert, dass es vom Polarisationsstrahlteiler 20 weiter zum Optikträger 40 geleitet wird. Bei dieser Ausführung ist vor dem Optikträger 40 und bevorzugt hinter den optischen Fokussiermitteln 35 ein optisch-brechendes Mittel 37 angeordnet. Dieses ist mit einem nicht dargestellten Motor verbunden und kann bewegt werden, um mit ein und demselben Gitter eine strukturierte Beleuchtung zu ändern. Das Lichtmikroskop 110 weist zudem elektronische Steuerungsmittel auf, die dazu eingerichtet sind, die optisch-brechenden Mittel 37 an verschiedene Positionen zu bewegen, zu jeder dieser Positionen ein Bild der Probe 65 aufzunehmen und diese Bilder zu einem Probenbild zu verrechnen. Das optisch-brechende Mittel 37 kann beispielsweise ein Keil sein, der über den Motor verschoben wird. Alternativ kann eine Wackelplatte mit planparallelen Oberflächen eingesetzt werden, die über den Motor verkippt wird.

Zusätzlich oder alternativ zu den optisch-brechenden Mitteln 37 kann eine besonders schnelle Phasenverschiebung über den Umlenkspiegel 30 erfolgen. Hierzu drehen elektronische Steuerungsmittel den Umlenkspiegel 30 so, dass ein bestimmtes Gitter nacheinander versetzt in die Probenebene 60 abgebildet wird. Zu jeder dieser Positionen des Umlenkspiegels 30 wird ein Bild der Probe 65 aufgezeichnet.

In durchgezogenen Linien ist in Fig. 3 ein Strahlengang des Lichtstrahls 15 für einen ersten Umlenkwinkel der Umlenkeinrichtung 30 gezeigt, womit der Lichtstrahl 15 auf das Gitter 42 geleitet wird. Gestrichelt ist ein Strahlengang für einen anderen Umlenkwinkel angedeutet, mit dem der Lichtstrahl auf das Gitter 41 geleitet wird. Die Gitter sind in der Zwischenbildebene 39 angeordnet, sodass sie scharf in die Probenebene 60 abgebildet werden. Zwei Strahlengänge, die von verschiedene Punkten am Optikträger 40 ausgehen und entsprechend auf zwei verschiedene Punkte in der Probenebene 60 fokussiert werden, sind ebenfalls eingezeichnet.

Bei den Ausführungen der Figuren 1 und 3 sind die Gitter 41 - 55 am Optikträger Reflexionsgitter. Alternativ können die Gitter 41 - 55 aber auch Transmissionsgitter sein. In diesem Fall sind Strahlführungsmittel zum Leiten von Licht, das die Transmissionsgitter durchlaufen hat, zu dem Objektiv 70, insbesondere zu dem Spiegel 61, vorhanden. Um die verschiedenen Strahlengänge durch die Transmissionsgitter auf einen gemeinsamen Strahlengang zum Objektiv 70 zusammenzuführen, umfassen die Strahlführungsmittel Strahlvereinigungsmittel, beispielsweise einen drehbaren Ausgangsspiegel. Dieser wird abhängig von einer Umlenkrichtung des Umlenkspiegels gedreht. Insbesondere kann der Ausgangsspiegel eine Rückseite des Umlenkspiegels bilden und zusammen mit diesem um eine gemeinsame Drehachse gedreht werden. Die Komponenten 20, 22 und 23 in den Figuren 1 und 3 können bei dieser Ausführung entfallen.

Durch die erfindungsgemäße Optikanordnung 100 und das erfindungsgemäße Lichtmikroskop 110 kann zwischen verschiedenen Gittereinstellungen für eine strukturierte Beleuchtung sowie zu einer Einstellung für Weitfeldbeleuchtung in besonders kurzer Zeit gewechselt werden. Zudem kann in einfacher Weise eine große Anzahl an Gittern verschiedener Ortsrichtungen und Gitterkonstanten bereitgestellt werden, ohne dass eine Beeinträchtigung der Strahlqualität hiermit einhergeht.

### Bezugszeichenliste

- 10: Lichtquelle
- 11, 12, 13: Lasermodule
- 14: Lichtleitfaser
- 15: Lichtstrahl
- 20: Strahlteiler
- 21: Fokussieroptik zum Fokussieren auf die Umlenkeinrichtung
- 22: Polarisator
- 23: polarisationsändernde Mittel
- 30: Umlenkeinrichtung, Umlenkspiegel
- 35: optische Fokussiermittel
- 37: Wackelplatte oder Keil
- 39: Zwischenbildebene
- 40: Optikträger
- 41 - 56: optische Baugruppen
- 41 - 45: erster Satz von Gittern
- 46 - 50: zweiter Satz von Gittern
- 51 - 55: dritter Satz von Gittern
- 56: Rückleitspiegel
- 58: schaltbare polarisationsändernde Mittel
- 60: Probenebene
- 61: Spiegel
- 62, 63: Linse oder Linsengruppe
- 64: Strahlteiler zum Trennen von Anregungs- und Detektionslicht
- 65: Probe
- 70: Objektiv
- 72: optisches Element
- 73: Linse oder Linsengruppe
- 74, 75: dichroitischer Strahlteiler
- 80: Detektoreinrichtung
- 81, 82, 83: Kameras
- 100: Optikanordnung
- 110: Lichtmikroskop

## Patentansprüche

1. Optikanordnung zum Positionieren in einem Strahlengang eines Lichtmikroskops
mit einem Optikträger (40), an dem ein erster Satz optischer Baugruppen (41 - 45) zum Erzeugen von strukturiertem Beleuchtungslicht unterschiedlicher Orientierungen angeordnet ist,
**dadurch gekennzeichnet,**
**dass** der erste Satz optischer Baugruppen (41 - 45) mehrere Gitter (41 - 45) mit gleicher Gitterkonstante und verschiedenen Gitterorientierungen aufweist und eine verstellbare Umlenkeinrichtung (30) vorhanden ist zum auswählbaren Umlenken eines Lichtstrahls (15) auf eines der Gitter (41 - 45) und zum Umlenken eines von diesem Gitter (41 - 45) kommenden Lichtstrahls (15) in Richtung einer zu untersuchenden Probe (65).

2. Optikanordnung nach Anspruch 1,
**dadurch gekennzeichnet,**
**dass** der erste Satz optischer Baugruppen (41 - 45) mehrere Bildfeldrotatoren zum Erzeugen von strukturiertem Beleuchtungslicht verschiedener Orientierungen aus auftreffendem strukturiertem Beleuchtungslicht aufweist.

3. Optikanordnung nach Anspruch 1 oder 2,
**dadurch gekennzeichnet,**
**dass** am Optikträger (40) zusätzlich mindestens eine der folgenden weiteren optischen Baugruppen (46 - 56) angeordnet ist:
- mindestens ein weiterer Satz von Gittern (46 - 50, 51 - 55) zum Erzeugen von strukturiertem Beleuchtungslicht, wobei ein weiterer Satz von Gittern (46 - 50, 51 - 55) jeweils mindestens drei Gitter (46 - 50, 51 - 55) aufweist, die eine gleiche Gitterkonstante haben und in unterschiedlichen Winkeln zueinander angeordnet sind, wobei sich verschiedene Sätze von Gittern in ihren Gitterkonstanten unterscheiden,
- zusätzliche Bildfeldrotatoren zum Erzeugen verschieden orientierter Gitterabbildungen, wobei im Strahlengang vor der Umlenkeinrichtung (30) ein Gitter angeordnet ist und von diesem Gitter kommendes Licht (15) über die Umlenkeinrichtung (30) auswählbar auf einen der Bildfeldrotatoren leitbar ist,
- ein Rückleitspiegel (46) zum Bereitstellen einer Weitfeldbeleuchtung, wobei ein von der Umlenkeinrichtung (30) kommender Lichtstrahl (15) mit dem Rückleitspiegel (46) zurück auf die Umlenkeinrichtung (30) leitbar ist, und
- ein Fenster zum Durchlassen des Lichtstrahls (15), der von der Umlenkeinrichtung (30) kommt, wobei Strahlführungsmittel zum Leiten des durchgelassenen Lichtstrahls (15) zur Umlenkeinrichtung (30) vorhanden sind und dass die verstellbare Umlenkeinrichtung (30) dazu eingerichtet ist, den Lichtstrahl (15) auswählbar außer auf eines der Gitter (41 - 45) auf eine der weiteren optischen Baugruppen (46 - 50, 51 - 55) zu lenken und den von dort kommenden Lichtstrahl (15) in Richtung der zu untersuchenden Probe (65) umzulenken..

4. Optikanordnung nach einem der Ansprüche 1 bis 3,
**dadurch gekennzeichnet,**
**dass** die optischen Baugruppen (41 - 56) in einer zweidimensionalen Anordnung nebeneinander auf dem Optikträger (40) positioniert sind.

5. Optikanordnung nach einem der Ansprüche 1 bis 4,
**dadurch gekennzeichnet,**
**dass** die Umlenkeinrichtung (30) einen Umlenkspiegel (30) aufweist, dass elektronische Steuerungsmittel vorhanden und dazu eingerichtet sind, zum Leiten des Lichtstrahls (15) auf ein gewünschtes Gitter (41 - 55) oder eine andere optische Baugruppe (56) den Umlenkspiegel (30) zu drehen und/oder zu verschieben.

6. Optikanordnung nach Anspruch 5,
**dadurch gekennzeichnet,**
**dass** die elektronischen Steuerungsmittel dazu eingerichtet sind, zur Phasenschiebung je Gitter (41 - 55) den Lichtstrahl (15) mit dem Umlenkspiegel (30) nacheinander in verschiedenen Umlenkwinkeln auf dasselbe Gitter (41 -55) zu leiten.

7. Optikanordnung nach einem der Ansprüche 1 bis 6,
**dadurch gekennzeichnet,**
**dass** die optischen Baugruppen (41 - 55) zum Zurückwerfen eines auftreffenden Lichtstrahls (15) zu der Umlenkeinrichtung (30) Reflexionsgitter sind.

8. Optikanordnung nach einem der Ansprüche 1 bis 7,
**dadurch gekennzeichnet,**
**dass** die Umlenkeinrichtung (30) einen Umlenkspiegel und einen Ausgangsspiegel aufweist,
**dass** mit dem Umlenkspiegel ein Lichtstrahl (15), der von einer Lichtquelle (10) des Lichtmikroskops kommt, auf den Optikträger (40) umlenkbar ist, dass die optischen Baugruppen (41 - 55) Transmissionsgitter sind zum Durchlassen eines von dem Umlenkspiegel kommenden Lichtstrahls (15) in Richtung des Ausgangsspiegels,
**dass** mit dem Ausgangsspiegel ein vom Optikträger (40) kommender Lichtstrahl (15) in Richtung der Probe (65) umlenkbar ist und dass elektronische Steuerungsmittel vorhanden und dazu eingerichtet sind, den Ausgangsspiegel gemeinsam mit dem Umlenkspiegel zu drehen und/oder zu verschieben.

9. Optikanordnung nach Anspruch 8,
**dadurch gekennzeichnet,**
**dass** der Ausgangsspiegel und der Umlenkspiegel zum gemeinsamen Drehen oder Verschieben an einer gemeinsamen Halterung befestigt ist, welche über die elektronischen Steuerungsmittel gedreht und/oder verschoben wird.

10. Optikanordnung nach einem der Ansprüche 1 bis 9,
**dadurch gekennzeichnet,**
**dass** ein Strahlteiler (60) vorhanden ist zum Leiten eines Lichtstrahls (15), der von einer Lichtquelle (10) des Lichtmikroskops kommt, in Richtung zur Umlenkeinrichtung (30) und zum Leiten eines Lichtstrahls (15), der von der Umlenkeinrichtung (30) kommt, in Richtung der zu untersuchenden Probe (65).

11. Optikanordnung nach Anspruch 10,
**dadurch gekennzeichnet,**
**dass** der Strahlteiler (60) ein Polarisationsstrahlteiler (60) ist.

12. Optikanordnung nach Anspruch 11,
**dadurch gekennzeichnet,**
**dass** im Strahlengang vor dem Polarisationsstrahlteiler (20) polarisationsbeeinflussende Mittel (22) zum Einstellen einer bestimmten Polarisationsrichtung des Lichtstrahls (15) vorhanden sind und
**dass** die polarisationsbeeinflussenden Mittel (22) schaltbar sind zum Auswählen, ob der Lichtstrahl (15) vom Polarisationsstrahlteiler (20) zur Umlenkeinrichtung (30) oder ohne auf die Umlenkeinrichtung (30) zu treffen in Richtung der Probe (65) geleitet wird.

13. Optikanordnung nach einem der Ansprüche 1 bis 12,
**dadurch gekennzeichnet,**
**dass** die Gitter (41 - 55) und übrige optische Baugruppen (56) am Optikträger (40) austauschbar gehalten sind und/oder eine Optikträgerhalterung zum austauschbaren Halten des Optikträgers (40) vorhanden ist.

14. Lichtmikroskop
mit einer Probenebene (60), in welcher eine zu untersuchende Probe (65) positionierbar ist, und
mit mindestens einer Lichtquelle (10) zum Aussenden eines Lichtstrahls (15) in Richtung der Probenebene (60),
**dadurch gekennzeichnet,**
**dass** in einem Strahlengang zwischen der Lichtquelle (10) und der Probenebene (60) eine Optikanordnung nach einem der Ansprüche 1 bis 13 vorhanden sind, wobei der Optikträger (40) mit den optischen Baugruppen (41 - 56) in einer Zwischenbildebene (39) des Lichtmikroskops angeordnet ist.

15. Lichtmikroskop nach Anspruch 14,
**dadurch gekennzeichnet,**
**dass** mindestens eine Kamera (81) zum Aufzeichnen einer Abbildung eines Probenbereichs vorhanden ist,
**dass** zwischen der Probenebene und der Kamera (81) ein Scanspiegel angeordnet ist und die elektronischen Steuerungsmittel dazu eingerichtet sind, mit dem Scanspiegel denselben Probenbereich nacheinander auf verschiedene Bereiche der Kamera (81) abzubilden.

## Claims

1. Optics arrangement for positioning in a beam path of a light microscope
comprising an optics carrier (40), on which a first set of optical assemblies (41-45) for generating structured illumination light with different orientations is disposed,
**characterized**
**in that** the first set of optical assemblies (41-45) has a plurality of gratings (41-45) with the same grating constant and different grating orientations, and an adjustable deflection device (30) is present for selectively deflecting a light beam (15) on one of the gratings (41-45) and for deflecting a light beam (15) coming from one of these gratings (41-45) in the direction of a sample (65) to be examined.

2. Optics arrangement according to Claim 1,
**characterized**
**in that** the first set of optical assemblies (41-45) has a plurality of image field rotators for producing structured illumination light with different orientations from incident structured illumination light.

3. Optics arrangement according to Claim 1 or 2,
**characterized**
**in that** additionally at least one of the following further optical assemblies (46-56) is disposed in the optics carrier (40):
- at least one further set of gratings (46-50, 51-55) for producing structured illumination light, wherein each further set of gratings (46-50, 51-55) has at least three gratings (46-50, 51-55), said gratings having a same gratings constant and being disposed at different angles with respect to one another, wherein different sets of gratings differ in terms of their grating constants,
- additional image field rotators for generating differently oriented grating images, wherein a grating is disposed in the beam path upstream of the deflection device (30) and light (15) coming from said grating is selectively guidable to one of the image field rotators by way of the deflection device (30),
- a guiding-back mirror (46) for providing wide-field illumination, wherein a light beam (15) coming from the deflection device (30) is guidable back to the deflection device (30) by way of the guiding-back mirror (46), and
- a window for passing the light beam (15) coming from the deflection device (30), wherein beam guiding means are present for guiding the passed light beam (15) to the deflection device (30),
and **in that** the adjustable deflection device (30) is configured to selectively steer the light beam (15) to one of the further optical assemblies (46-50, 51-55) in addition to one of the gratings (41-45) and deflect the light beam (15) coming from there in the direction of the sample (65) to be examined.

4. Optics arrangement according to any one of Claims 1 to 3,
**characterized**
**in that** the optical assemblies (41-56) are positioned next to one another on the optics carrier (40) in a two-dimensional arrangement.

5. Optics arrangement according to any one of Claims 1 to 4,
**characterized**
**in that** the deflection device (30) has a deflection mirror (30),
**in that** electronic control means are present and configured to rotate and/or displace the deflection mirror (30) for guiding the light beam (15) to a desired grating (41-55) or any other optical assembly (56).

6. Optics arrangement according to Claim 5,
**characterized**
**in that** the electronic control means are configured, for the purposes of a phase shift per grating (41-55), to successively guide the light beam (15) with the deflection mirror (30) to the same grating (41-55) at different deflection angles.

7. Optics arrangement according to any one of Claims 1 to 6,
**characterized**
**in that** the optical assemblies (41-55) are reflection gratings for casting back an incident light beam (15) to the deflection device (30).

8. Optics arrangement according to any one of Claims 1 to 7,
**characterized**
**in that** the deflection device (30) has a deflection mirror and an output mirror,
**in that** the deflection mirror allows a light beam (15) coming from a light source (10) of the light microscope to be deflectable on the optics carrier (40),
**in that** the optical assemblies (41-55) are transmission gratings for passing a light beam (15) coming from the deflection mirror in the direction of the output mirror,
**in that** the output mirror allows a light beam (15) coming from the optics carrier (40) to be deflectable in the direction of the sample (65) and in that electronic control means are present and configured to rotate and/or displace the output mirror together with the deflection mirror.

9. Optics arrangement according to Claim 8,
**characterized**
**in that** the output mirror and the deflection mirror are fastened to a common holder for the purposes of a common rotation or displacement, said common holder being rotated and/or displaced by way of the electronic control means.

10. Optics arrangement according to any one of Claims 1 to 9,
**characterized**
**in that** a beam splitter (60) is present for guiding a light beam (15) coming from a light source (10) of the light microscope in the direction of the deflection device (30) and for guiding a light beam (15) coming from the deflection device (30) in the direction of the sample (65) to be examined.

11. Optics arrangement according to Claim 10,
**characterized**
**in that** the beam splitter (60) is a polarization beam splitter (60).

12. Optics arrangement according to Claim 11,
**characterized**
**in that** polarization-influencing means (22) for setting a certain polarization direction of the light beam (15) are present in the beam path upstream of the polarization beam splitter (20) and in that the polarization-influencing means (22) are switchable for selecting whether the light beam (15) is guided from the polarization device (20) to the deflection device (30) or in the direction of the sample (65) without striking the deflection device (30) .

13. Optics arrangement according to any one of Claims 1 to 12,
**characterized**
**in that** the gratings (41-55) and the remaining optical assemblies (56) are held on the optics carrier (40) in exchangeable fashion and/or an optics carrier holder for exchangeable holding of the optics carrier (40) is present.

14. Light microscope
comprising a sample plane (60), in which a sample (65) to be examined is positionable, and comprising at least one light source (10) for emitting a light beam (15) in the direction of the sample plane (60),
**characterized**
**in that** an optics arrangement according to any one of Claims 1 to 13 is present in a beam path between the light source (10) and the sample plane (60), wherein the optics carrier (40) with the optical assemblies (41-56) is disposed in an intermediate image plane (39) of the light microscope.

15. Light microscope according to Claim 14,
**characterized**
**in that** at least one camera (81) is present for recording an image of a sample region,
**in that** a scanning mirror is disposed between the sample plane and the camera (81) and the electronic control means are configured to use a scanning mirror to successively image the same sample region onto different regions of the camera (81).

## Revendications

1. Dispositif optique à positionner dans un passage de faisceau d'un microscope optique avec un support optique (40) au niveau duquel un premier jeu de modules optiques (41 - 45) est disposé pour produire une lumière d'éclairage structurée selon différentes orientations ;
**caractérisé en ce que** :
le premier jeu de modules optiques (41 - 45) comporte plusieurs grilles (41 - 45) de même constante de grille et différentes orientations de grille et qu'un dispositif de déviation (30) mobile est présent pour sélectionner la déviation d'un faisceau lumineux (15) sur une des grilles (41 - 45) et pour dévier un faisceau lumineux (15) provenant de cette grille (41 - 45) en direction d'un échantillon (65) à examiner.

2. Dispositif optique selon la revendication 1,
**caractérisé en ce que** le premier jeu de modules optiques (41 - 45) comporte plusieurs rotateurs de champ visuel destinés à produire de la lumière d'éclairage structurée selon différentes orientations à partir de la lumière d'éclairage structurée incidente.

3. Dispositif optique selon la revendication 1 ou 2,
**caractérisé en ce qu'**en sus au moins un des modules optiques (46 - 56) supplémentaires suivants est disposé au niveau du support optique (40) :
- au moins un jeu supplémentaire de grilles (46 - 50, 51 - 55) permettant de produire de la lumière d'éclairage structurée, un jeu supplémentaire de grilles (46 - 50, 51 - 55) comportant respectivement au moins trois grilles (46 - 50, 51 - 55) ayant une même constante de grille et disposées selon différents angles les unes par rapport aux autres, les différents jeux de grilles se distinguant par leurs constantes de grille ;
- des rotateurs de champ visuel supplémentaires permettant de donner une orientation différente à une grille, sachant qu'une grille est disposée avant le dispositif de déviation (30) dans le passage de faisceau et que la lumière (15) provenant de cette grille peut être amenée au choix sur un des rotateurs de champ visuel par le biais du dispositif de déviation (30) ;
- un rétroviseur (46) permettant de mettre à disposition un éclairage de large champ, un faisceau lumineux (15) provenant du dispositif de déviation (30) pouvant être ramené sur le dispositif de déviation (30) par le rétroviseur (46) ; et
- une fenêtre pour le passage du faisceau lumineux (15) provenant du dispositif de déviation (30), des moyens de guidage de rayon étant présents pour conduire le faisceau lumineux (15) dirigé vers le dispositif de déviation (30) et que le dispositif de déviation (30) mobile est conçu pour diriger le faisceau lumineux (15) au choix hors d'une des grilles (41 - 45) d'un des modules optiques (46 - 50, 51 - 55) supplémentaires et de dévier le faisceau lumineux (15) provenant de là en direction de l'échantillon (65) à examiner.

4. Dispositif optique selon l'une quelconque des revendications 1 à 3, **caractérisé en ce que** les modules optiques (41 - 56) sont positionnés côte à côte sur le support optique (40) dans un dispositif bidimensionnel.

5. Dispositif optique selon l'une quelconque des revendications 1 à 4, **caractérisé en ce que** le dispositif de déviation (30) comporte un miroir déviant (30), qu'un moyen de commande électronique est présent et conçu pour guider le faisceau lumineux (15) sur une grille (41 - 55) souhaitée ou qu'un autre module optique (56) est présent pour faire pivoter et/ou coulisser le miroir déviant (30).

6. Dispositif optique selon la revendication 5, **caractérisé en ce que** les moyens de commande électroniques sont conçus pour guider le faisceau lumineux (15) à l'aide du miroir déviant (30) successivement selon différents angles de déviation sur la même grille (41 - 55) en vue de décaler les phases des grilles (41 - 55) respectives.

7. Dispositif optique selon l'une quelconque des revendications 1 à 6, **caractérisé en ce que** les modules optiques (41 - 55) sont des grilles réfléchissantes orientées vers le dispositif de déviation (30) afin de renvoyer un faisceau lumineux (15) incident.

8. Dispositif optique selon l'une quelconque des revendications 1 à 7, **caractérisé en ce que** :
le dispositif de déviation (30) comporte un miroir déviant et un miroir de sortie ;
un faisceau lumineux (15) provenant d'une source lumineuse (10) du microscope optique peut être dévié sur le support optique (40) à l'aide du miroir déviant ;
les modules optiques (41 - 55) sont des grilles de transmission pour le passage d'un faisceau lumineux (15) provenant du miroir déviant en direction du miroir de sortie ;
un faisceau lumineux (15) provenant du support optique (40) peut être dévié à l'aide du miroir de sortie en direction de l'échantillon (65) ; et
des moyens de commande électroniques sont présents et conçus pour faire pivoter et/ou coulisser le miroir de sortie conjointement avec le miroir déviant.

9. Dispositif optique selon la revendication 8, **caractérisé en ce que** le miroir de sortie et le miroir déviant sont fixés à un support commun pour tourner ou coulisser ensemble et tournent et/ou pivotent via les moyens de commande électroniques.

10. Dispositif optique selon l'une quelconque des revendications 1 à 9, **caractérisé en ce qu'**un séparateur de faisceau (60) est présent pour guider un faisceau lumineux (15) provenant d'une source lumineuse (10) du microscope optique, en direction du dispositif de déviation (30) et pour guider un faisceau lumineux (15) provenant du dispositif de déviation (30) en direction de l'échantillon (65) à examiner.

11. Dispositif optique selon la revendication 10, **caractérisé en ce que** le séparateur de faisceau (60) est un séparateur de faisceau par polarisation (60).

12. Dispositif optique selon la revendication 11, **caractérisé en ce que** :
les moyens (22) ayant une influence sur la polarisation sont présents dans le passage de faisceau avant le séparateur de faisceau par polarisation (20) pour le réglage d'une direction de polarisation définie du faisceau lumineux (15) ;
les moyens (22) ayant une influence sur la polarisation sont commutables afin de choisir si le faisceau lumineux (15) est guidé du séparateur de faisceau par polarisation (20) au dispositif de déviation (30) ou sans rencontrer le dispositif de déviation (30) en direction de l'échantillon (65).

13. Dispositif optique selon l'une quelconque des revendications 1 à 12, **caractérisé en ce que** les grilles (41 - 55) et les modules optiques (56) restants sont maintenus de façon amovible au niveau du support optique (40) et/ou qu'une fixation de support optique est présente pour maintenir de façon amovible le support optique (40).

14. Microscope optique :
avec un plan d'échantillon (60) dans lequel un échantillon (65) à examiner peut être positionné ; et
avec au moins une source lumineuse (10) destinée à émettre un faisceau lumineux (15) en direction du plan d'échantillon (60), **caractérisé en ce que** :
un dispositif optique selon l'une quelconque des revendications 1 à 13 est présent dans un passage de faisceau entre la source lumineuse (10) et le plan d'échantillon (60), de façon avantageuse le support optique (40) doté des modules optiques (41 - 56) étant disposé dans un plan d'image intermédiaire (39) du microscope optique.

15. Microscope optique selon la revendication 14, **caractérisé en ce que** :
au moins une caméra (81) est présente pour enregistrer une image d'un plan d'échantillon ;
un miroir de balayage est disposé entre le plan d'échantillon et la caméra (81) et les moyens de commande électroniques sont conçus pour reproduire successivement avec le miroir de balayage le même plan d'échantillon sur différentes régions de la caméra (81) .
